(19) Europäisches Patentamt
European Patent Office
Office européen des brevets

(11) **EP 3 780 459 A1**

(12) **EUROPEAN PATENT APPLICATION**
published in accordance with Art. 153(4) EPC

(43) Date of publication:
**17.02.2021 Bulletin 2021/07**

(51) Int Cl.:
*H04L 5/00* (2006.01)       *H04W 72/04* (2009.01)

(21) Application number: **19780901.5**

(86) International application number:
**PCT/CN2019/080352**

(22) Date of filing: **29.03.2019**

(87) International publication number:
**WO 2019/192396 (10.10.2019 Gazette 2019/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.04.2018 CN 201810291088**

(71) Applicant: **ZTE Corporation**
**Shenzhen, Guangdong 518057 (CN)**

(72) Inventors:
• LI, Jian
  **Shenzhen, Guangdong 518057 (CN)**
• LIANG, Yachao
  **Shenzhen, Guangdong 518057 (CN)**
• HAO, Peng
  **Shenzhen, Guangdong 518057 (CN)**

(74) Representative: **Aipex B.V.**
**P.O. Box 30223**
**3001 DE Rotterdam (NL)**

(54) **TRANSMISSION METHOD AND APPARATUS**

(57)     Disclosed are a transmission method and an apparatus. The transmission method includes: when a first preset condition is satisfied during a process of slot aggregation transmission, stopping transmitting data in time slots where transmission has not been carried out in aggregated time slots. The present application stops transmitting data in the time slots where transmission has not been carried out in the aggregated time slots, so as not to cause the problem of data transmission failure in the time slots where transmission has not been carried out in the aggregated time slots, and improves the success rate of slot aggregation transmission when BWP switching occurs during the slot aggregation transmission process.

200

When a first preset condition is satisfied during a process of slot aggregation transmission, stop transmitting data in time slots where transmission has not been carried out in aggregated time slots

201

Transmit data in the time slots where transmission has not been carried out according to second downlink control information

**FIG. 2**

EP 3 780 459 A1

## Description

The present application claims priority to Chinese patent application No. 201810291088.5 filed on April 3, 2018, the content of which is incorporated herein by reference in its entirety.

TECHNICAL FIELD

The present application relates to communication technology, for example, to a transmission method and apparatus.

BACKGROUND

With the development of wireless communication technologies and the increasing demand of users for communication, in order to satisfy the needs for higher, faster and newer communication, the 5th Generation (5G) mobile communication technology has become the development tendency of future network. The 5G communication system is considered to be implemented in a higher and faster frequency band (for example, above 3 GHz), so as to achieve a higher data rate.

The New RAT (NR) introduces slot aggregation transmission to ensure coverage. In the process of slot aggregation transmission, switching of Bandwidth Part occurs, resulting in transmission failure.

SUMMARY

The embodiments of the present application provide a transmission method and apparatus, which can improve the success rate of slot aggregation transmission when switching of Bandwidth Part (BWP) occurs during the process of slot aggregation transmission.

An embodiment of the present application provides a transmission method, and the method includes: when a first preset condition is satisfied during a process of slot aggregation transmission, stopping transmitting data in time slots where transmission has not been carried out in aggregated time slots.

An embodiment of the present application provides a transmission method, and the method includes: when switching of partial bandwidth occurs during a process of slot aggregation transmission, mapping a partial bandwidth before the switching to a partial bandwidth after the switching, and transmitting data in time slots where transmission has not been carried out in aggregated time slots by using the partial bandwidth after the switching.

An embodiment of the present application provides a transmission method, and the method includes: determining a legal time slot used for slot aggregation transmission according to at least one of time domain information or frequency domain information; and transmitting data in the legal time slot.

An embodiment of the present application provides a transmission method, and the method includes: transmitting data in all time slots of slot aggregation by using a same partial bandwidth.

An embodiment of the present application provides a transmission apparatus, and the apparatus includes a processing module.

The processing module is configured to stop transmitting data in time slots where transmission has not been carried out in aggregated time slots when a first preset condition is satisfied during a process of slot aggregation transmission.

Transmission of a first time slot in the slot aggregation transmission is indicated by first downlink control information or is configured by a radio resource control message.

An embodiment of the present application provides a transmission apparatus, and the apparatus includes a mapping module and a transmission module.

The mapping module is configured to map a Bandwidth Part before a switching to a Bandwidth Part after the switching when switching of Bandwidth Part occurs during a process of slot aggregation transmission.

The first transmission module is configured to transmit data in time slots where transmission has not been carried out in aggregated time slots by using the Bandwidth Part after the switching.

An embodiment of the present application provides a transmission apparatus, and the apparatus includes a determination module and a second transmission module.

The determination module is configured to determine a legal time slot used for slot aggregation transmission according to time domain information and frequency domain information; where the legal time slot for the slot aggregation transmission is a time slot used for the slot aggregation transmission.

The second transmission module is configured to transmit data in the legal time slot.

An embodiment of the present application provides a transmission apparatus, and the apparatus includes a third transmission module.

The third transmission module is configured to transmit data in all time slots of slot aggregation by using a same Bandwidth Part.

An embodiment of the present application provides a transmission apparatus, and the transmission apparatus includes a processor and a computer-readable storage medium, where the computer-readable storage medium stores an instruction which, when executed by the processor, implements any one of the above transmission methods.

An embodiment of the present application provides a computer-readable storage medium on which a computer program is stored, where the computer program is executed by a processor to implement steps of any one of the above transmission methods.

Other features and advantages of the present application will be elaborated hereinafter in the description and, moreover, partially become apparent from the description, or will be understood through implementation of the present application. The object and other advantages of the present application may be implemented and obtained through structures set forth in the description, claims and drawings.

BRIEF DESCRIPTION OF DRAWINGS

The drawings are provided for further understanding of the technical solutions of the present application, and constitute a part of the description. The drawings and the embodiments of the present application are used to explain the technical solutions of the present application, and not intended to limit the technical solutions of the present application.

FIG. 1 is a schematic diagram of slot aggregation transmission in the related art of the present application;

FIG. 2 is a flowchart of a transmission method according to an embodiment of the present application;

FIG. 3 is a schematic diagram of transmission in time slots where transmission has not been carried out of time slots where aggregation is stopped according to an embodiment of the present application;

FIG. 4 is a schematic diagram of carrying out the transmission in time slots where transmission has not been carried out according to a grant signaling according to an embodiment of the present application;

FIG. 5 is a flowchart of a transmission method proposed according to another embodiment of the present application;

FIG. 6(a) is a schematic diagram 1 of mapping a Bandwidth Part before a switching to a Bandwidth Part after the switching according to an embodiment of the present application;

FIG. 6(b) is a schematic diagram 2 of mapping a Bandwidth Part before a switching to a Bandwidth Part after the switching according to an embodiment of the present application;

FIG. 6(c) is a schematic diagram 3 of mapping a Bandwidth Part before a switching to a Bandwidth Part after the switching according to an embodiment of the present application;

FIG. 7 is a flowchart of a transmission method proposed according to another embodiment of the present application;

FIG. 8(a) is a schematic diagram 1 of determining a legal time slot for slot aggregation transmission in another embodiment of the present application;

FIG. 8(b) is a schematic diagram 2 of determining a legal time slot for slot aggregation transmission in another embodiment of the present application;

FIG. 8(c) is a schematic diagram 3 of determining a legal time slot for slot aggregation transmission in another embodiment of the present application;

FIG. 8(d) is a schematic diagram 4 of determining a legal time slot for slot aggregation transmission in another embodiment of the present application;

FIG. 9 is a flowchart of a transmission method proposed in another embodiment of the present application;

FIG. 10 is a structural diagram of a transmission apparatus according to another embodiment of the present application;

FIG. 11 is a structural diagram of a transmission apparatus according to another embodiment of the present application;

FIG. 12 is a structural diagram of a transmission apparatus according to another embodiment of the present application; and

FIG. 13 is a structural diagram of a transmission apparatus according to another embodiment of the present application.

DETAILED DESCRIPTION

The embodiments of the present application will be described in detail below with reference to the drawings.

The steps shown in the flowcharts of the drawings may be performed by a computer system such as a group of computer executable instructions. Moreover, although logical sequences are shown in the flowcharts, the shown or described steps may be performed in sequences different from those described herein in some cases.

The New RAT (NR) introduces slot aggregation transmission to ensure coverage, that is, User Equipment (UE) repeatedly transmits a Transmission Block (TB) at a same time domain symbol position and frequency domain Resource Block (RB) position in multiple time slots, the length of time slots that can be aggregated at present is 1 or 2 or 4 or 8. The base station configures the downlink (DL) aggregation factor in the Radio Resource Control (RRC) message to indicate whether aggregated transmission is performed in downlink or not, and uses the uplink (UL) aggregation factor in the RRC message to indicate whether the slot aggregation transmission is performed in uplink or not. If the configured aggregation factor is greater than 1, the factor indicates that the user equipment (UE) needs slot aggregation transmission. The base station will be scheduled by a grant message in a first slot of slot aggregation transmission, and repeatedly transmits the Transmission Block (TB) at the same time domain symbol position and the same frequency domain RB position in subsequent available time slots.

In addition, the base station will configure a set of Bandwidth Parts (BWPs) for the UE through a high-level signaling, up to 4 DownLink (DL) BWPs and 4 UpLink (UL) BWPs, different BWPs can be independently configured with subcarrier spacing, bandwidth, and frequency domain position. The current standard BWP switching can be divided into static BWP switching, dynamic BWP switching and time-based BWP switching, for example, when a larger data packet arrives and the data packet needs to be transmitted in a larger bandwidth, then the transmission needs to switch to a larger bandwidth BWP, 5G base station (gNB) can dynamically switch BWP through the BWP indication field in the Downlink Control Information (DCI), and the UE detects that the BWP indication field is different from the previous BWP indication field information, that is, determines that the BWP switching needs to be performed. In addition, in the current standard, for a Time Division Duplexing (TDD) system, it is necessary to ensure that the DL BWP and the UL BWP has the same center carrier frequency, which means that if the DL BWP is switched for the TDD system, the UL BWP also needs to be switched.

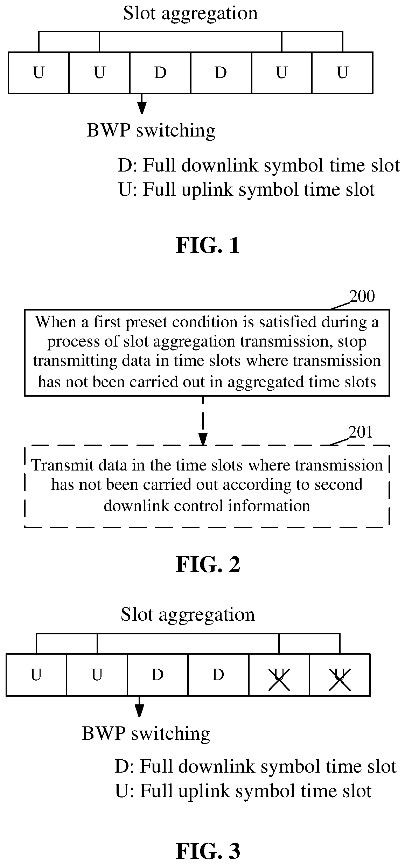

As shown in FIG. 1, the U squares represent uplink time slots, and the D squares represent downlink time slots. It is assumed that four time slots are aggregated, and the aggregated four uplink time slots. When BWP switching occurs during the UE performs uplink slot aggregation transmission, if the UE continues to perform slot aggregation transmission according to the original UL BWP, the transmission may fail.

Referring to FIG. 2, an embodiment of the present application proposes a transmission method, and the method includes a step 200.

In the step 200, when a first preset condition is satisfied during a process of slot aggregation transmission, transmitting data is stopped in time slots where transmission has not been carried out in aggregated time slots.

In an embodiment of the present application, transmission of a first time slot in the slot aggregation transmission is indicated by first downlink control information or is configured by a radio resource control message.

A first DCI is used for grant based transmission, and a RRC message is used for grant free transmission.

For example, the first DCI dynamically indicates a frequency domain resource, a time domain symbol, a modulation and coding method, number of code streams, number of transmission layers, and Redundancy Version (RV) used for the transmission of the first time slot in the slot aggregation transmission.

For another example, RRC semi-statically configures the frequency domain resource, the time domain symbol, the modulation and coding method, the number of code streams, the number of transmission layers, and the RV used for the transmission of the first time slot in the slot aggregation transmission.

In an embodiment of the present application, data is carried in any of: Physical Uplink Control Channel (PUCCH); Physical Uplink Shared Channel (PUSCH); Physical Downlink Shared Channel (PDSCH); or Physical Downlink Control Channel (PDCCH).

In an embodiment of the present application, the first preset condition includes at least one of: switching of Bandwidth Part occurs; a Bandwidth Part indication field in third downlink control information is different from a Bandwidth Part indication field in first downlink control information; the Bandwidth Part indication field in the third downlink control information is different from a Bandwidth Part indication field in fourth downlink control information; at least one newly added bit field or another bit field other than the Bandwidth Part indication field in the third downlink control information satisfies a second preset condition; a subcarrier spacing of a Bandwidth Part after the switching is different from a subcarrier spacing of the Bandwidth Part before the switching; or a size of a Bandwidth Part after the switching is different from a size of a Bandwidth Part before the switching. The third downlink control information and the fourth downlink control information are used to indicate data transmission in non-aggregated transmission time slots.

The fact that at least one newly added bit field or another bit field other than the Bandwidth Part indication field in the third downlink control information satisfies a second preset condition includes at least one of: the newly added bit field or the another bit field other than the Bandwidth Part indication field indicates to stop transmitting data in time slots where transmission has not been carried out in the aggregated time slots; or a preset state of the newly added bit field or the another bit field other than the Bandwidth Part indication field indicates to stop transmitting data in the time slots where transmission has not been carried out in the aggregated time slots.

The newly added bit field or the another bit field other than the Bandwidth Part indication field may explicitly or implicitly indicate to stop transmitting data in the time slots where transmission has not been carried out in the aggregated time slots.

For example, if a BWP switching occurs, transmitting data is stopped in the subsequent slot aggregation.

Alternatively, if BWP switching occurs and the subcarrier spacing of the BWP after the switching is different from the subcarrier spacing before the switching, transmitting data is stopped in the subsequent slot aggregation.

Alternatively, if a BWP switching occurs and the size of the BWP after the switching is different from the size of the BWP before the switching, transmitting data is stopped in the subsequent slot aggregation.

Alternatively, if a BWP switching occurs and the size of the BWP after the switching is different from the size of the BWP before the switching, and the subcarrier spacing of the BWP after the switching is different from the subcarrier spacing before the switching, transmitting data is stopped in the subsequent slot aggregation.

Alternatively, it is implicitly indicated to stop transmitting data in subsequent slot aggregation by adding a bit field.

Alternatively, the BWP indication field bit field is used to indicate whether the BWP is switched, and when the BWP indication field indicates that the BWP is switched, it is implicitly indicated to stop transmitting data in the subsequent slot aggregation.

Alternatively, the preset state of the frequency domain resource allocation domain is used to stop transmitting data in the subsequent slot aggregation, for example, bits in the frequency domain resource allocation domain are all configured to 1 or to 0.

In an embodiment of the present application, the UE may determine whether the BWP is switched according to whether the BWP indication field in the third DCI sent by the gNB is the same as the BWP indication field in the first DCI. In an embodiment, when the BWP indication field in the third DCI is different from the BWP indication field in the first DCI, it is determined that the BWP is switched; when the BWP indication field in the third DCI is the same as the BWP indication field in the first DCI, it is determined that the BWP isn't switched.

For example, FIG. 3 is a schematic diagram of 4-slot uplink aggregate transmission. The first time slot of the uplink aggregate transmission is indicated by the DCI (UL grant) issued before the first U time slot (i.e., uplink time slot), that is, the first DCI, to transmit data. For example, the BWP indication field in the first DCI is 00, indicating that the BWP ID is 1, the BWP switching occurs in the first D time slot (i.e., downlink time slot) in the figure, and the UE receives the DCI (DL grant) in this time slot, that is, the third DCI. For example, the BWP indication field in the third DCI is 01, indicating that the use of the BWP ID is 2, which indicates that the BWP is switched from BWP1 to BWP2. For the TDD frame structure, the downlink BWP changes, to ensure that the TDD uplink center frequency is consistent with the downlink center frequency, the uplink BWP also needs to be changed; the third DCI indicates that the DL grant is used for downlink data transmission and occupies a time slot for non-uplink aggregate transmission.

In an embodiment of the present application, the UE may determine whether the BWP is switched according to whether the BWP indication field in the third DCI sent by the gNB is the same as the BWP indication field in the fourth DCI. In an embodiment, when the BWP indication field in the third DCI is different from the BWP indication field in the fourth DCI, it is determined that the BWP is switched; when the BWP indication field in the third DCI is the same as the BWP indication field in the fourth DCI, it is determined that the BWP isn't switched.

For example, FIG. 3 is a schematic diagram of 4-slot uplink aggregate transmission. The DCI (DL grant) issued before the first U time slot, that is, the fourth DCI indicates the transmission of downlink data. For example, the BWP indication field in the fourth DCI is 10, indicating that the BWP ID is 3, the BWP switching occurs in the first D time slot in the figure, and the UE receives the DCI (DL grant) in this time slot, that is, the third DCI. For example, the BWP indication field in the third DCI is 01, indicating that the use of the BWP ID is 2, which indicates that the BWP is switched from BWP3 to BWP2. For the TDD frame structure, the downlink BWP changes, to ensure that the TDD uplink center frequency is consistent with the downlink center frequency, the uplink BWP also needs to be changed; the third DCI and the fourth DCI indicate that the DL grant is used for downlink data transmission and occupies a time slot for non-uplink aggregate transmission.

In an embodiment of the present application, the above-mentioned slot aggregation may be uplink slot aggregation, and the BWP may be UL BWP; or, slot aggregation may be downlink slot aggregation, and the BWP may be DL BWP.

For example, for a TDD system, it is necessary to ensure that the center carrier frequencies of the DL BWP and the UL BWP are the same, so when the DL BWP is switched, the UL BWP will inevitably be switched; similarly, when the UL BWP is switched, the DL BWP will inevitably be switched, then transmitting data in subsequent time slots will be stopped. As shown in FIG. 3, U is an uplink time slot and D is a downlink time slot. It is supposed that the length of the aggregated time slots is 4, and the aggregated four uplink time slots. When the BWP switching occurs during the transmission of the downlink time slot, the UE stops transmitting data in the subsequent two uplink time slots, for example, two uplink time slots with "×" in the figure.

For another example, when the BWP before the switching is greater than the BWP after the switching, if the mapping between the Resource Block (RB) of the BWP before the switching and the RB of the BWP after the switching cannot be completed, it is necessary to stop transmitting data in the time slots where transmission has not been carried out in the aggregated time slots.

In an embodiment, the method further includes a step 201.

In the step 201, data is transmitted in time slots where transmission has not been carried out according to second downlink control information.

In an embodiment of the present application, the data transmitted in time slots where transmission has not been carried out and the data transmitted in time slots where transmission has been carried out may be the same or different.

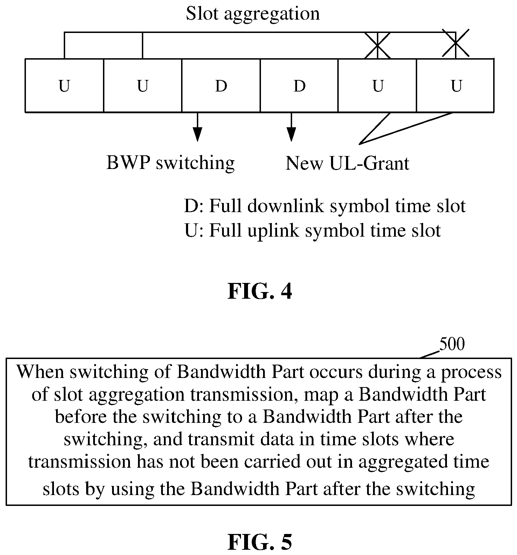

As shown in FIG. 4, U is an uplink time slot and D is a downlink time slot. It is supposed that the length of aggregated time slots is 4, and the aggregated four uplink time slots are interspersed with two of the aggregated four downlink time slots. When the BWP switching occurs during the transmission of the downlink time slot, the UE stops transmitting data in the subsequent two uplink time slots, for example, two uplink time slots with "×" in the figure. In addition, according to the second downlink control information (that is, the Grant signaling in FIG. 4), data is transmitted in time slots where transmission has not been carried out.

The embodiment of the present application includes: when a first preset condition is satisfied during a process of slot aggregation transmission, stopping transmitting data in time slots where transmission has not been carried out in aggregated time slots. The embodiment of the present application stops transmitting data in the time slots where transmission has not been carried out in the aggregated time slots, so as not to cause the problem of data transmission failure in the time slots where transmission has not been carried out in the aggregated time slots, and improves the success rate of slot aggregation transmission when BWP switching occurs during the slot aggregation transmission process.

Referring to FIG. 5, another embodiment of the present application proposes a transmission method, and the method includes a step 500.

In the step 500, when switching of Bandwidth Part occurs during a process of slot aggregation transmission, a Bandwidth Part before the switching is mapped to a Bandwidth Part after the switching, and data is transmitted in time slots where transmission has not been carried out in aggregated time slots by using the Bandwidth Part after the switching.

In an embodiment of the present application, the step in which the Bandwidth Part before the switching is mapped to the Bandwidth Part after the switching includes at least one of the following steps.

An i-th resource block of the Bandwidth Part before the switching is mapped to an i-th resource block of the Bandwidth Part after the switching, where i is an integer greater than or equal to 0.

An i-th resource block of the Bandwidth Part before the switching is mapped to an $(i+\Delta)$-th or $(i-A)$-th resource block of the Bandwidth Part after the switching, where i and $\Delta$ are integers greater than or equal to 0.

A first resource block of the Bandwidth Part before the switching is mapped to a second resource block of the Bandwidth Part after the switching; where a frequency domain position of the first resource block and a frequency domain position of the second resource block are the same.

An i-th resource block of the Bandwidth Part before the switching is mapped to an $(i \bmod X)$-th resource block of the Bandwidth Part after the switching, where X is a number of resource blocks of the Bandwidth Part after the switching.

Resource blocks of the Bandwidth Part before the switching is mapped to resource blocks of the Bandwidth Part after the switching from a lowest resource block of the Bandwidth Part after the switching.

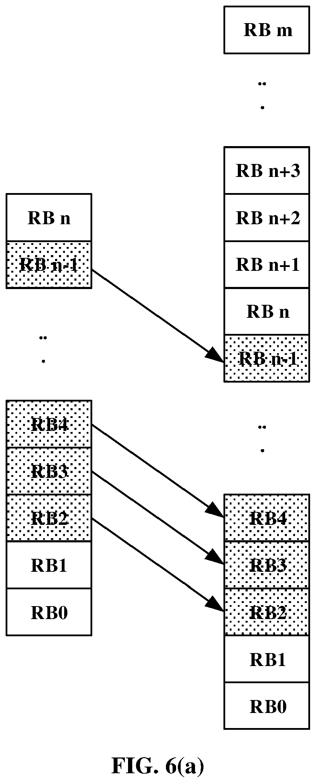

For example, when the Bandwidth Part before the switching is less than or equal to the Bandwidth Part after the switching, the i-th resource block of the Bandwidth Part before the switching is mapped to the $(i+\Delta)$-th or $(i-\Delta)$-th resource block of the Bandwidth Part after the switching; where i and $\Delta$ are integers greater than or equal to 0. As shown in FIG. 6(a), it is supposed that the BWP before the switching contains (n+1) RBs, i.e., RB0, RB1,..., RBn, and the BWP after the switching contains (m+1) RBs, i.e., RB0, RB1,..., RBm, where m is greater than n, and the RBs allocated to the UE includes RB2, RB3, RB4,..., RB(n-1), then the RB2 of the UE is mapped to the RB2 of the BWP after the switching, and the RB3 of the UE is mapped to RB3 of the BWP after the switching, and so on, the RB(n-1) of the UE is mapped to the RB(n-1) of the BWP after the switching. That is, the above-mentioned Δ is zero.

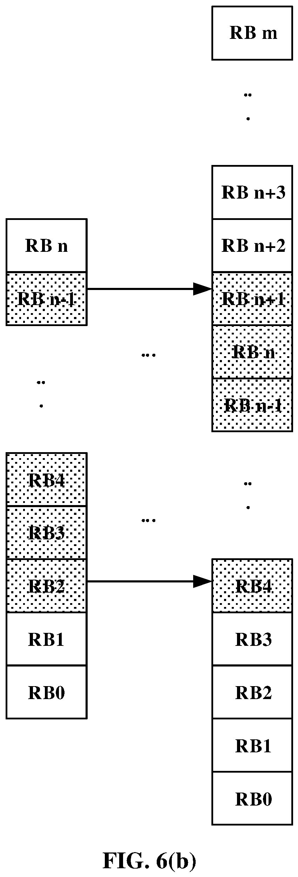

For another example, as shown in FIG. 6(b), it is supposed that the BWP before the switching contains (n+1) RBs, namely RB0, RB1,..., RBn, and the BWP after the switching contains (m+1) RBs, namely RB0, RB1,..., RBm, m is greater than n, and the RBs allocated to the UE includes RB2, RB3, RB4,..., RB(n-1), then the RB2 of the UE is mapped to the RB4 of the BWP after the switching, and the RB3 of the UE is mapped to RB5 of the BWP after the switching, and so on, the RB (n-1) of the UE is mapped to the RB (n+1) of the BWP after the switching. That is, the above-mentioned Δ is 2.

From another perspective, the frequency domain resource position of RB2 of the BWP before the switching is the same as the frequency domain resource position of RB4 of the BWP after the switching; the frequency domain resource position of RB3 of the BWP before the switching is the same as the frequency domain resource position of RB5 of the BWP after the switching; and so on, the frequency domain resource position of the RB(n-1) of the BWP before the switching is the same as the frequency domain resource position of the RB(n+1) of the BWP after the switching, then RB2 of the UE is mapped to RB4 of the BWP after the switching, RB3 of the UE is mapped to RB5 of the BWP after the switching, and so on, the RB(n-1) of the UE is mapped to RB(n+1) of the BWP after the switching.

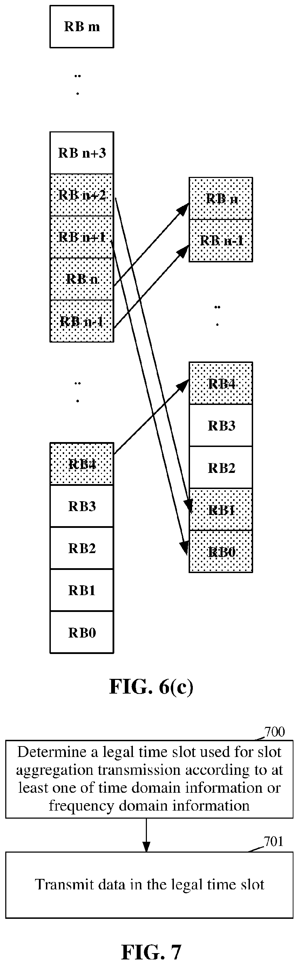

For another example, when the Bandwidth Part before the switching is greater than or equal to the Bandwidth Part after the switching, the i-th resource block of the Bandwidth Part before the switching is mapped to the (i mod X)-th resource block of the Bandwidth Part after the switching; where X is the number of resource blocks of Bandwidth Part after the switching. As shown in FIG. 6(c), it is supposed that the BWP before the switching contains (m+1) RBs, i.e., RB0, RB1,..., RBm, and the BWP after the switching contains (n+1) RBs, i.e., RB0, RB1,..., RBn, m is greater than n, and the RBs allocated to the UE includes RB4, RB5, RB6,..., RB(n-2), then the RB4 of the UE is mapped to the RB(4 mod (n+1)) of the BWP after the switching, and the RB5 of the UE is mapped to RB(5 mod (n+1)) of the BWP after the switching, and so on, the RB (n-2) of the UE is mapped to the RB ((n-2) mod (n+1)) of the BWP after the switching.

For another example, when the Bandwidth Part before the switching is greater than or equal to the Bandwidth Part after the switching, the resource block of the Bandwidth Part before the switching is mapped from the lowest resource block of the Bandwidth Part after the switching.

For another example, the BWP1 before the switching includes 50 RBs, and the BWP2 after the switching becomes 20 RBs. The number of resource blocks allocated to the UE for uplink data transmission in BWP1 is 10, occupying the frequency domain positions of RB11-RB1120. If the lowest resource block mapping method is used, the resource blocks are directly mapped to RB0-RB9 of the 20RBs in BWP2.

For another example, when the Bandwidth Part before the switching is greater than or equal to the Bandwidth Part after the switching, if the number of resource blocks is too large and the mapping cannot be completed, the mapping can be performed based on the small bandwidth BWP, and the UE or gNB further performs rate matching. The rate matching means that the bits on the transmission channel are punctured or retransmitted to match the carrying capacity of the physical channel, and the channel mapping reaches the required bit rate for transmission; for example, the BWP1 before the switching includes 50 RBs, and the BWP2 after the switching becomes 10 RBs, the number of resource blocks allocated to the UE for uplink data transmission in BWP1 is 20, occupying the frequency domain positions of RB1-RB20, then only 10 RBs are mapped, and other 10 RBs are not mapped.

Others may be analogized.

In an embodiment, after the step in which the Bandwidth Part before the switching is mapped to the Bandwidth Part after the switching, the method further includes the following steps.

Frequency hopping processing is performed on Bandwidth Part after the switching.

Data is transmitted in the time slots where transmission has not been carried out by using the Bandwidth Part after the switching after the frequency hopping processing.

In an embodiment of the present application, performing frequency hopping processing on Bandwidth Part after the switching includes: performing frequency hopping calculation based on the size of the Bandwidth Part after the switching.

In an embodiment, Frequency hopping processing is performed on the switched BWP according to the formula:

$$\mathrm{RB}\left(n_s^\mu\right) = \begin{cases} \mathrm{RB} & n_s^\mu \bmod 2 = 0 \\ \left(\mathrm{RB} + \mathrm{RB}_{\mathrm{offset}}\right) \bmod N_{BWP}^{size} & n_s^\mu \bmod 2 = 1 \end{cases}$$

where $n_s^\mu$ is the current time slot number in the radio frame, $\mathrm{RB}\left(n_s^\mu\right)$ is the position of RB after frequency hopping processing in the time slot $n_s^\mu$, RB is the position of the RB before frequency hopping processing in the time slot. The RB is calculated based on the resource allocation information of NR resource allocation method 1 (consistent with Long Term Evolved (LTE) resource allocation method 2, used to indicate a group of continuously allocated resource blocks). $RB_{offset}$ is the frequency domain offset between two frequency domain frequency hopping. The values are shown in Table 1. The value ranges of $RB_{offset}$ corresponding to different BWPs are different. Indicated by the frequency hopping indication field in the DCI, $N_{BWP}^{size}$ is the bandwidth of the BWP after the switching.

Table 1

| Bandwidth (RB) | Number of bits in frequency hopping indication field | Frequency hopping indication field | Frequency domain offset |
|---|---|---|---|
| < 50 | 1 | 0 | $N_{BWP}^{size}/2$ |
| | | 1 | $N_{BWP}^{size}/4$ |
| ≥ 50 | 2 | 00 | $N_{BWP}^{size}/2$ |
| | | 01 | $N_{BWP}^{size}/4$ |
| | | 10 | $-N_{BWP}^{size}/4$ |
| | | 11 | Reserved |

In the embodiment of the present application, before frequency hopping processing is performed on Bandwidth Part after the switching, the method further includes: a frequency hopping time slot counter is reset, or the frequency hopping time slot counter is not reset.

The step in which frequency hopping processing is performed on the Bandwidth Part after the switching includes: frequency hopping processing is performed on the Bandwidth Part after the switching according to the reset frequency hopping time slot counter or the non-reset frequency hopping time slot counter.

The above-mentioned frequency hopping processing performed on the Bandwidth Part after the switching according to the frequency hopping time slot counter means that the current time slot number used in the frequency hopping processing of the Bandwidth Part after the switching is obtained from the time slot counter. After the BWP is switched, the time slot counter may be reset or not reset; for example, according to the inter-time slot frequency hopping method in the current standard, frequency hopping is performd in even-numbered time slots and not in odd-numbered time slots. For four time slots aggregated transmission, the time slot counter (0 1 2 3) Increase. If BWP switching occurs, the time slot counter can remain unchanged or reset. If a BWP switching occurs in the third time slot, the third time slot timer starts counting from zero to (0 1 0 1), if BWP switching occurs in the fourth slot, the fourth slot timer starts counting from zero to (0 1 2 0). In addition, the time slot count may also include non-uplink time slot (such as downlink time slot or special time slot S). As shown in FIG. 1, the counts of UUDDUU are (012345). If the time slot counter is reset due to BWP switching, the count may become (012012).

In the embodiment of the present application, the frequency domain offset after the switching may be indicated by the frequency hopping indication field after zero padding or truncating in the original DCI. For example, when the bandwidth of the BWP before the switching is less than 50, and the bandwidth of the BWP after the switching is greater than or equal to 50, the frequency domain offset may be indicated by zero padding in the frequency hopping indication field in the original DCI. In other words, the frequency domain offset before the switching may be indicated by 0 and 1, then the frequency domain offset after the switching may be indicated by 00 and 01.

When the bandwidth of the BWP before the switching is greater than or equal to 50, and the bandwidth of the BWP after the switching is less than 50, the frequency domain offset may be indicated by truncating the frequency hopping indication domain in the original DCI. In other words, the frequency domain offset before the switching may be indicated by 00, 01, 10 and 11, then the frequency domain offset after the switching may be indicated by 0 and 1.

In addition, in an embodiment of the present application, transmission of a first time slot in the slot aggregation transmission is indicated by downlink control information or is configured by a radio resource control message.

A first DCI is used for grant based transmission, and a RRC message is used for grant free transmission.

For example, the first DCI dynamically indicates a frequency domain resource, a time domain symbol, a modulation and coding method, number of code streams, number of transmission layers, and Redundancy Version (RV) used for the transmission of the first time slot in the slot aggregation transmission.

For another example, RRC semi-statically configures the frequency domain resource, the time domain symbol, the modulation and coding method, the number of code streams, the number of transmission layers, and the RV used for the transmission of the first time slot in the slot aggregation transmission.

In an embodiment of the present application, data is carried in any of: Physical Uplink Control Channel (PUCCH); Physical Uplink Shared Channel (PUSCH); Physical Downlink Shared Channel (PDSCH); and Physical Downlink Control Channel (PDCCH).

The embodiment of the present application includes: when switching of Bandwidth Part occurs during a process of slot aggregation transmission, a Bandwidth Part before the switching is mapped to a Bandwidth Part after the switching, and data is transmitted in time slots where transmission has not been carried out in aggregated time slots by using the Bandwidth Part after the switching. In the embodiment of the present application, Bandwidth Part after switching is used to transmit data in the time slots where transmission has not been carried out in the aggregated time slots, so as to successfully transmit the data in the time slots where transmission has not been carried out, and improves the success rate of slot aggregation transmission when BWP switching occurs during the slot aggregation transmission process.

Referring to FIG. 7, another embodiment of the present application proposes a transmission method, and the method includes a step 700 and a step 701.

In the step 700, a legal time slot used for slot aggregation transmission is determined according to at least one of time domain information or frequency domain information.

In an embodiment of the present application, the time domain information includes at least one of: the start and length indicator (SLIV); a time domain symbol start position; a time domain symbol duration; or Bandwidth Part conversion time.

Bandwidth Part conversion time is $\left\lfloor n \cdot \dfrac{2^{\mu_{PUSCH}}}{2^{\mu_{PDCCH}}} \right\rfloor + K_2$ or $\left\lfloor n \cdot \dfrac{2^{\mu_{PDSCH}}}{2^{\mu_{PDCCH}}} \right\rfloor + K_0$ , n is the time slot for scheduling DCI, $K0$ is an interval between the time slot for scheduling DCI and the time slot for receiving downlink data, and $K_2$ is an interval between the time slot for scheduling DCI and the time slot for sending uplink data, $\mu_{PDSCH}$ is the sub-carrier interval used by the Physical Downlink Shared Channel (PDSCH) and $\mu_{PDCCH}$ is the sub-carrier interval used by the Physical Downlink Control Channel (PDCCH).

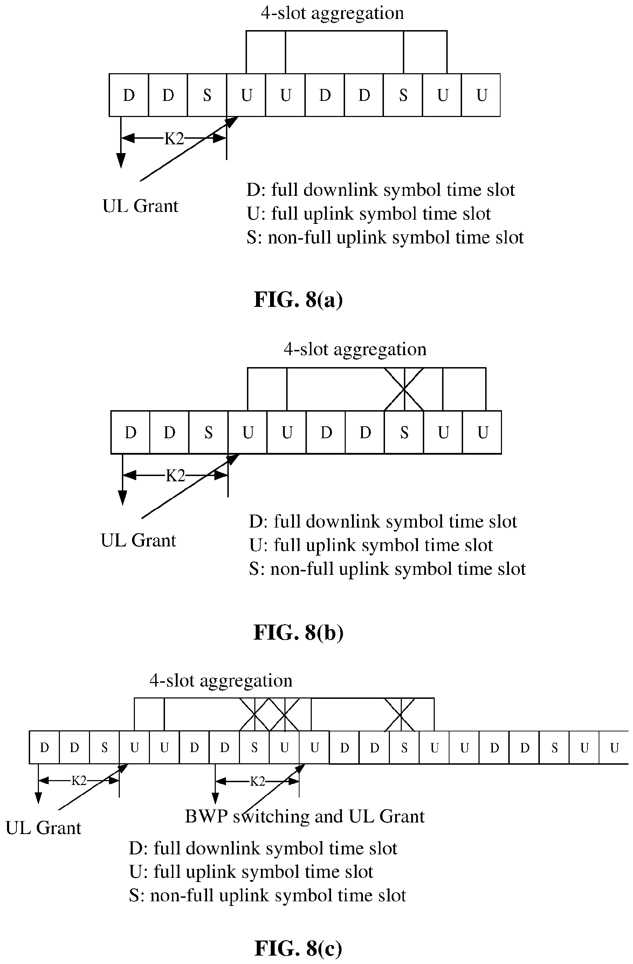

For example, as shown in FIG. 8(a), it is supposed that 4-slot uplink aggregate transmission is to be performed. The time domain symbols occupied by the first aggregated time slot transmission are symbols 0 to 4, the start position of the time domain symbol being the 0th symbol, and the duration of the time domain symbols being 5 symbols. In the figure, U is a full downlink symbol time slot, D is a full uplink symbol time slot, and S is a non-full uplink symbol time slot. If the symbols 0 to 4 of the second S time slot shown in FIG. 8(a) are occupied by downlink symbols or unknown symbols, it means that the time domain data cannot be mapped, as shown in FIG. 8(b), then the time slot is considered to be not a legal time slot, and slot aggregation transmission is not possible, then this time slot is skipped and the next available time slot is directly determined, and the symbols 0 to 4 in the next U time slot are available, then the time slot is considered to be a legal time slot and may be used for slot aggregation transmission.

For another example, the time domain symbols occupied by the first aggregated time slot transmission are symbols 0 to 6 by SLIV indication, the starting position of the time domain symbols being the 0th symbol, and the duration of the time domain symbols being 7 symbols. As shown in FIG. 8(a), the symbols 0 to 6 of the second S time slot are available, indicating that the time domain data can be mapped. Therefore, the time slot is considered to be a legal time slot and can be used for uplink slot aggregation transmission.

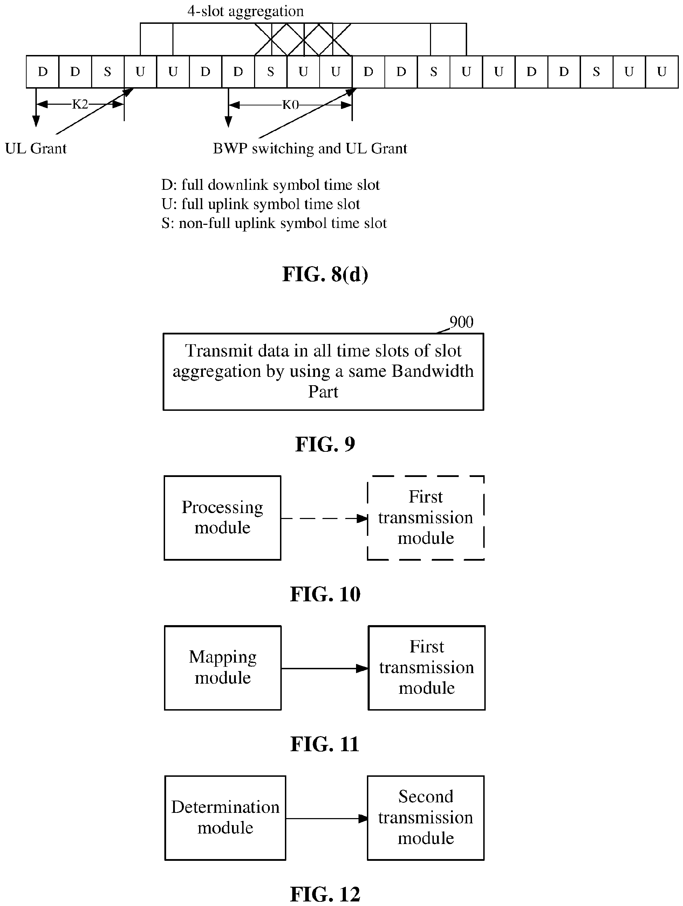

For another example, due to the BWP switching and the delay in the BWP switching, the UE cannot receive and send data during the BWP conversion time. As shown in FIG. 8(c) and 8(d), within the BWP conversion time $K2$ or $K0,$ these time slots are not legal time slots and cannot be used for uplink slot aggregation transmission, and other available time slots after the conversion time are continued to be determined.

In an embodiment of the present application, the frequency domain information includes at least one of: a subcarrier spacing of a Bandwidth Part; a subcarrier spacing of a Bandwidth Part after a switching; a size of a Bandwidth Part; a size of a Bandwidth Part after a switching; a frequency domain position of a Bandwidth Part; a frequency domain position of a Bandwidth Part after a switching; or a resource allocation field being a preset state, for example, the resource allocation domain being Null.

For example, the size of the BWP before the switching is different from the BWP after the switching. The size of the BWP before the switching is 50 RBs, the BWP size after the switching is 20 RBs, and the allocated resources are 25 RBs, which cannot be fully mapped to the BWP after the switching. Therefore, it is considered that the time slot is not a legal time slot, and aggregate transmission cannot be performed.

For another example, if the subcarrier spacing of the BWP before the switching and the subcarrier spacing of the BWP after the switching are different, the time slot is considered to be not a legal time slot and cannot be aggregated; or if the frequency domain position of the BWP before the switching and the frequency domain position of the BWP after the switching are different, the time slot is considered to be not a legal time slot and cannot be aggregated; or if the resource allocation field used to indicate the BWP after the switching is configured as Null, the time slot is considered to be not a legal time slot and cannot be aggregated; or if the resource allocation field used to indicate the BWP after the switching is configured to a preset state, then the time slot is considered to be not a legal time slot and cannot be aggregated, for example, the resource allocation field is configured as all 0 or all 1.

In an embodiment of the present application, each of the time domain information and the frequency domain information can be used alone as a determination index for whether a time slot is a qualified time slot, or the time domain information and the frequency domain information can be jointly used as a determination index for whether a time slot is a qualified time slot.

In step 701, data is transmitted in the legal time slot.

In an embodiment of the present application, transmission of a first time slot in the slot aggregation transmission is indicated by downlink control information or is configured by a radio resource control message.

A first DCI is used for grant based transmission, and a RRC message is used for grant free transmission.

For example, the first DCI dynamically indicates a frequency domain resource, a time domain symbol, a modulation and coding method, number of code streams, number of transmission layers, and Redundancy Version (RV) used for the transmission of the first time slot in the slot aggregation transmission.

For another example, RRC semi-statically configures the frequency domain resource, the time domain symbol, the modulation and coding method, the number of code stream, the number of transmission layer, and the RV used for the transmission of the first time slot in the slot aggregation transmission.

In the embodiment of the present application, data is carried in any of: Physical Uplink Control Channel (PUCCH); Physical Uplink Shared Channel (PUSCH); Physical Downlink Shared Channel (PDSCH); and Physical Downlink Control Channel (PDCCH).

Referring to FIG. 9, another embodiment of the present application proposes a transmission method, and the method includes a step 900.

In the step 900, data is transmitted in all time slots of slot aggregation by using a same Bandwidth Part.

In the embodiment of the present application, the same Bandwidth Part includes a same size of the Bandwidth Part, a same subcarrier spacing of the Bandwidth Part, and a same frequency domain position.

Referring to FIG. 10, another embodiment of the present application proposes a transmission apparatus, which includes a processing module.

The processing module is configured to stop transmitting data in time slots where transmission has not been carried out in aggregated time slots when satisfying a first preset condition during a process of slot aggregation transmission.

Transmission of a first time slot in the slot aggregation transmission is indicated by first downlink control information or is configured by a radio resource control message.

In an embodiment, a transmission module is further included.

The transmission module is configured to transmit data in the time slots where transmission has not been carried out according to the second downlink control information.

The data to be transmitted in the time slots where transmission has not been carried out is same as data transmitted in time slots where transmission has been carried out.

In the embodiment of the present application, the first preset condition includes at least one of: switching of Bandwidth Part occurs; a Bandwidth Part indication field in third downlink control information is different from a Bandwidth Part indication field in first downlink control information; the Bandwidth Part indication field in the third downlink control information is different from a Bandwidth Part indication field in fourth downlink control information; at least one other bit field in the third downlink control information satisfies the second preset condition; a subcarrier spacing of a Bandwidth Part after the switching is different from a subcarrier spacing of the Bandwidth Part before the switching; or a size of a Bandwidth Part after the switching is different from a size of a Bandwidth Part before the switching. The third downlink control information and the fourth downlink control information are used to indicate data transmission in non-aggregated transmission time slots.

In an embodiment, the fact that at least one other bit field in the third downlink control information satisfies the second preset condition includes at least one of: the other bit field explicitly indicates to stop transmitting data in the time slots where transmission has not been carried out in the aggregated time slots; the other bit field implicitly indicates to stop transmitting data in the time slots where transmission has not been carried out in the aggregated time slots; or the preset state of the other bit field indicates to stop transmitting data in the time slots where transmission has not been carried out in the aggregated time slots.

In an embodiment, the other bit field is a newly added bit field.

Referring to FIG. 11, another embodiment of the present application proposes a transmission apparatus, including a mapping module and a first transmission module.

The mapping module is configured to map a Bandwidth Part before a switching to a Bandwidth Part after the switching when switching of Bandwidth Part occurs during a process of slot aggregation transmission.

The first transmission module is configured to transmit data in time slots where transmission has not been carried out in aggregated time slots by using the Bandwidth Part after the switching.

In an embodiment, the mapping module is further configured to implement the following functions.

When switching of Bandwidth Part occurs during the slot aggregation transmission, the Bandwidth Part before the switching is mapped to the Bandwidth Part after the switching by using at least one of the methods described below.

An i-th resource block of the Bandwidth Part before the switching is mapped to an i-th resource block of the Bandwidth Part after the switching, where i is an integer greater than or equal to 0.

An i-th resource block of the Bandwidth Part before the switching is mapped to an $(i+\Delta)$-th or $(i-A)$-th resource block of the Bandwidth Part after the switching, where i and $\Delta$ are integers greater than or equal to 0.

A first resource block of the Bandwidth Part before the switching is mapped to a second resource block of the Bandwidth Part after the switching; where a frequency domain position of the first resource block and a frequency domain position of the second resource block are the same.

An i-th resource block of the Bandwidth Part before the switching is mapped to an (i mod X)-th resource block of the Bandwidth Part after the switching, where X is a number of resource blocks of the Bandwidth Part after the switching.

Resource blocks of the Bandwidth Part before the switching is mapped to resource blocks of the Bandwidth Part after the switching from a lowest resource block of the Bandwidth Part after the switching.

In an embodiment, the first transmission module is further configured to: perform frequency hopping processing is performed on the Bandwidth Part after the switching, and transmit data in the time slots where transmission has not been carried out by using the Bandwidth Part after the switching after the frequency hopping processing.

In an embodiment, the first transmission module is further configured to: reset a frequency hopping time slot counter, or not reset the frequency hopping time slot counter; and perform frequency hopping processing on the Bandwidth Part after the switching according to the reset frequency hopping time slot counter or the non-reset frequency hopping time slot counter.

Referring to FIG. 12, another embodiment of the present application proposes a transmission apparatus, which includes a determination module and a second transmission module.

The determination module is configured to determine a legal time slot used for slot aggregation transmission according to at least one of time domain information and frequency domain information; where the legal time slot for the slot aggregation transmission is a time slot used for the slot aggregation transmission.

The second transmission module is configured to transmit data in the legal time slot.

In an embodiment of the present application, the time domain information includes at least one of: the start and length indicator; a time domain symbol start position; a time domain symbol duration; or Bandwidth Part conversion time.

The Bandwidth Part conversion time is $\left\lfloor n \cdot \dfrac{2^{\mu_{PUSCH}}}{2^{\mu_{PDCCH}}} \right\rfloor + K_2$ or $\left\lfloor n \cdot \dfrac{2^{\mu_{PDSCH}}}{2^{\mu_{PDCCH}}} \right\rfloor + K_0$, wherein n is a time slot for scheduling downlink control information, and $K_0$ is a spacing between a time slot for scheduling downlink control information and a time slot for receiving downlink data, $K_2$ is a spacing between a time slot for scheduling downlink control information and a time slot for sending uplink data, $\mu_{PDSCH}$ is a subcarrier spacing adopted by a physical downlink shared channel, and $\mu_{PDCCH}$ is a subcarrier spacing adopted by a physical downlink control channel.

In an embodiment of the present application, the frequency domain information includes at least one of: a subcarrier spacing of a Bandwidth Part; a subcarrier spacing of a Bandwidth Part after a switching; a size of a Bandwidth Part; a size of a Bandwidth Part after a switching; a frequency domain position of a Bandwidth Part; a frequency domain position of a Bandwidth Part after a switching; or a resource allocation field being a preset state.

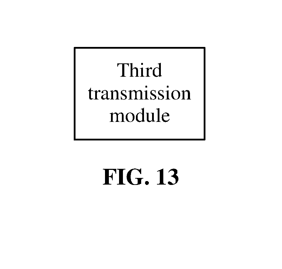

Referring to FIG. 13, another embodiment of the present application proposes a transmission apparatus, including a third transmission module.

The third transmission module is configured to transmit data in all time slots of slot aggregation by using a same Bandwidth Part.

For the specific implementation of the above process, reference may be made to the implementation of the above embodiment, which will not be repeated here.

Another embodiment of the present application provides a transmission apparatus, and the transmission apparatus includes a processor and a computer-readable storage medium, where the computer-readable storage medium stores an instruction which, when executed by the processor, implements any one of the above transmission methods.

Another embodiment of the present application provides a computer-readable storage medium on which a computer program is stored, where the computer program is executed by a processor to implement steps of any one of the above transmission methods.

It should be understood by those skilled in the art that functional modules/units in all or part of the steps of the method, the system and the apparatus disclosed above may be implemented as software, firmware, hardware and appropriate combinations thereof. In the hardware implementation, the division of the functional modules/units mentioned in the above description may not correspond to the division of physical components. For example, one physical component may have several functions, or one function or step may be implemented jointly by several physical components. Some or all components may be implemented as software executed by processors such as digital signal processors or microcontrollers, hardware, or integrated circuits such as application specific integrated circuits. Such software may be distributed on a computer-readable medium, which may include a computer storage medium (or a non-transitory medium and a communication medium (or a transitory medium). As is known to those skilled in the art, the term, computer storage medium, includes volatile and nonvolatile, removable and non-removable media implemented in any method or technology for storing information (such as computer-readable instructions, data structures, program modules or other data). Computer storage media include, but are not limited to, Random Access Memory (RAM), Read-Only Memory (Read-Only Memory, ROM), and Electrically Erasable Programmable Read Only Memory (EEPROM), Flash memory or other storage technology, Compact Disc Read-Only Memory (CD-ROM), Digital Versatile Disc (DVD) or other optical disk storage, magnetic cassettes, magnetic tapes, magnetic disk storage or other magnetic storage devices, or any other medium that can be used to store desired information and that can be accessed by a computer. In addition, as is known to those skilled in the art, the communication medium generally includes computer-readable instructions, data structures, program modules or other data in modulated data signals such as carriers or other transmission mechanisms, and may include any information delivery medium.

## Claims

1. A transmission method, comprising:
   in response to satisfying a first preset condition during a process of slot aggregation transmission, stopping transmitting data in time slots where transmission has not been carried out in aggregated time slots.

2. The method of claim 1, wherein the first preset condition comprises at least one of:

   switching of Bandwidth Part occurs;
   a Bandwidth Part indication field in third downlink control information is different from a Bandwidth Part indication field in first downlink control information;
   the Bandwidth Part indication field in the third downlink control information is different from a Bandwidth Part indication field in fourth downlink control information;
   at least one newly added bit field or another bit field other than the Bandwidth Part indication field in the third downlink control information satisfies a second preset condition;
   a subcarrier spacing of a Bandwidth Part after the switching is different from a subcarrier spacing of the Bandwidth Part before the switching; or
   a size of a Bandwidth Part after the switching is different from a size of a Bandwidth Part before the switching;

   wherein the third downlink control information and the fourth downlink control information are used to indicate data transmission in non-aggregated transmission time slots, and the first downlink control information is used to indicate data transmission of a first time slot in the slot aggregation transmission.

3. The method of claim 2, wherein the at least one newly added bit field or the another bit field other than the Bandwidth Part indication field in the third downlink control information satisfies the second preset condition comprises at least one of:

   the newly added bit field or the another bit field other than the Bandwidth Part indication field indicates to stop transmitting data in time slots where transmission has not been carried out in the aggregated time slots; or
   a preset state of the newly added bit field or the another bit field other than the Bandwidth Part indication field indicates to stop transmitting data in the time slots where transmission has not been carried out in the aggregated time slots.

4. The method of any one of claims 1 to 3, wherein the data transmission of the first time slot in the slot aggregation transmission is indicated by first downlink control information or is configured by a radio resource control message.

**5.** The method of any one of claims 1 to 3, further comprising:

instructing to transmit data in the time slots where transmission has not been carried out according to the second downlink control information;

wherein the data to be transmitted in the time slots where transmission has not been carried out is same as data transmitted in time slots where transmission has been carried out.

**6.** A transmission method, comprising:

in response to switching of Bandwidth Part during a process of slot aggregation transmission, mapping a Bandwidth Part before the switching to a Bandwidth Part after the switching, and transmitting data in time slots where transmission has not been carried out in aggregated time slots by using the Bandwidth Part after the switching.

**7.** The method of claim 6, wherein mapping the Bandwidth Part before the switching to the Bandwidth Part after the switching comprises at least one of:

mapping an i-th resource block of the Bandwidth Part before the switching to an i-th resource block of the Bandwidth Part after the switching, wherein i is an integer greater than or equal to 0;

mapping an i-th resource block of the Bandwidth Part before the switching to an (i+$\Delta$)-th or (i-$\Delta$)-th resource block of the Bandwidth Part after the switching, wherein i and $\Delta$ are integers greater than or equal to 0;

mapping a first resource block of the Bandwidth Part before the switching to a second resource block of the Bandwidth Part after the switching; wherein a frequency domain position of the first resource block and a frequency domain position of the second resource block are the same;

mapping an i-th resource block of the Bandwidth Part before the switching to an (i mod X)-th resource block of the Bandwidth Part after the switching, wherein X is a number of resource blocks of the Bandwidth Part after the switching; or

mapping resource blocks of the Bandwidth Part before the switching from a lowest resource block of the Bandwidth Part after the switching.

**8.** The method of claim 6 or 7, wherein after mapping the Bandwidth Part before the switching to the Bandwidth Part after the switching, the method further comprises:

performing frequency hopping processing on the Bandwidth Part after the switching; and

transmitting data in the time slots where transmission has not been carried out by using the Bandwidth Part after the switching after the frequency hopping processing.

**9.** The method of claim 8, wherein the performing frequency hopping processing on the Bandwidth Part after the switching comprises:

performing frequency hopping calculation based on a size of the Bandwidth Part after the switching.

**10.** The method of claim 8, wherein before performing frequency hopping processing on the Bandwidth Part after the switching, the method further comprises:

resetting a frequency hopping time slot counter, or not resetting the frequency hopping time slot counter;

wherein the performing frequency hopping processing on the Bandwidth Part after the switching comprises:

performing frequency hopping processing on the Bandwidth Part after the switching according to the reset frequency hopping time slot counter or the non-reset frequency hopping time slot counter.

**11.** A transmission method, comprising:

determining a legal time slot used for slot aggregation transmission according to at least one of time domain information or frequency domain information; and

transmitting data in the legal time slot.

**12.** The method of claim 11, wherein the time domain information comprises at least one of:

a start length indicator;

a time domain symbol start position;

a time domain symbol duration; or

Bandwidth Part conversion time.

**13.**

The method of claim 12, wherein the Bandwidth Part conversion time is $\left\lfloor n \cdot \frac{2^{\mu_{PUSCH}}}{2^{\mu_{PDCCH}}} \right\rfloor + K_2$ or $\left\lfloor n \cdot \frac{2^{\mu_{PDSCH}}}{2^{\mu_{PDCCH}}} \right\rfloor + K_0$, wherein n is a time slot for scheduling downlink control information, and $K_0$ is a spacing between a time slot for scheduling downlink control information and a time slot for receiving downlink data, $K_2$ is a spacing between a time slot for scheduling downlink control information and a time slot for sending uplink data, $\mu_{PDSCH}$ is a subcarrier spacing adopted by a physical downlink shared channel, and $\mu_{PDCCH}$ is a subcarrier spacing adopted by a physical downlink control channel.

**14.** The method of claim 11, wherein the time domain information comprises at least one of:

a subcarrier spacing of a Bandwidth Part;
a subcarrier spacing of a Bandwidth Part after a switching;
a size of a Bandwidth Part;
a size of a Bandwidth Part after a switching;
a frequency domain position of a Bandwidth Part;
a frequency domain position of a Bandwidth Part after a switching; or
a resource allocation field being a preset state.

**15.** A transmission method, comprising:
transmitting data in all time slots of slot aggregation by using a same Bandwidth Part.

**16.** A transmission apparatus, comprising:
a processing module, which is configured to stop transmitting data in time slots where transmission has not been carried out in aggregated time slots in response to satisfying a first preset condition during a process of slot aggregation transmission;
wherein transmission of a first time slot in the slot aggregation transmission is indicated by first downlink control information or is configured by a radio resource control message.

**17.** A transmission apparatus, comprising:

a mapping module, which is configured to map a Bandwidth Part before a switching to a Bandwidth Part after the switching in response to switching of Bandwidth Part during a process of slot aggregation transmission; and
a transmission module, which is configured to transmit data in time slots where transmission has not been carried out in aggregated time slots by using the Bandwidth Part after the switching.

**18.** A transmission apparatus, comprising:

a determination module, which is configured to determine a legal time slot used for slot aggregation transmission according to time domain information and frequency domain information; wherein the legal time slot for the slot aggregation transmission is a time slot used for the slot aggregation transmission; and
a transmission module, which is configured to transmit data in the legal time slot.

**19.** A transmission apparatus, comprising:
a third transmission module, which is configured to transmit data in all time slots of slot aggregation by using a same Bandwidth Part.

**20.** A transmission apparatus, comprising a processor and a computer-readable storage medium, wherein the computer-readable storage medium stores instructions which, when executed by the processor, implement the transmission method according to any one of claims 1 to 15.

**21.** A computer readable medium, which is configured to store a computer program which, when executed by a processor, implement the transmission method according to any one of claims 1 to 15.

Slot aggregation

| U | U | D | D | U | U |
|---|---|---|---|---|---|

BWP switching

D: Full downlink symbol time slot
U: Full uplink symbol time slot

**FIG. 1**

_200

When a first preset condition is satisfied during a
process of slot aggregation transmission, stop
transmitting data in time slots where transmission
has not been carried out in aggregated time slots

_201

Transmit data in the time slots where transmission
has not been carried out according to second
downlink control information

**FIG. 2**

Slot aggregation

| U | U | D | D | X | X |
|---|---|---|---|---|---|

BWP switching

D: Full downlink symbol time slot
U: Full uplink symbol time slot

**FIG. 3**

Slot aggregation

U | U | D | D | U | U

BWP switching    New UL-Grant

D: Full downlink symbol time slot
U: Full uplink symbol time slot

**FIG. 4**

500

When switching of Bandwidth Part occurs during a process of slot aggregation transmission, map a Bandwidth Part before the switching to a Bandwidth Part after the switching, and transmit data in time slots where transmission has not been carried out in aggregated time slots by using the Bandwidth Part after the switching

**FIG. 5**

RB m

RB n+3

RB n RB n+2

RB n-1 RB n+1

RB n

RB n-1

RB4

RB3 RB4

RB2 RB3

RB1 RB2

RB0 RB1

RB0

**FIG. 6(a)**

RB m

..
.

RB n+3

RB n+2

RB n

RB n+1

RB n-1

RB n

...

RB n-1

..
.

RB4

..
.

RB3

...

RB2

RB4

RB1

RB3

RB0

RB2

RB1

RB0

**FIG. 6(b)**

RB m

..
.

RB n+3

RB n+2

RB n+1

RB n

RB n-1

..
.

RB4

RB3

RB2

RB1

RB0

RB n

RB n-1

..
.

RB4

RB3

RB2

RB1

RB0

## FIG. 6(c)

700

Determine a legal time slot used for slot aggregation transmission according to at least one of time domain information or frequency domain information

701

Transmit data in the legal time slot

## FIG. 7

4-slot aggregation

UL Grant

D: full downlink symbol time slot
U: full uplink symbol time slot
S: non-full uplink symbol time slot

**FIG. 8(a)**

4-slot aggregation

UL Grant

D: full downlink symbol time slot
U: full uplink symbol time slot
S: non-full uplink symbol time slot

**FIG. 8(b)**

4-slot aggregation

UL Grant

BWP switching and UL Grant

D: full downlink symbol time slot
U: full uplink symbol time slot
S: non-full uplink symbol time slot

**FIG. 8(c)**

4-slot aggregation

| D | D | S | U | U | D | D | S | U | U | D | D | S | U | U | D | D | S | U | U |

K2

K0

UL Grant

BWP switching and UL Grant

D: full downlink symbol time slot
U: full uplink symbol time slot
S: non-full uplink symbol time slot

**FIG. 8(d)**

900

Transmit data in all time slots of slot
aggregation by using a same Bandwidth
Part

**FIG. 9**

Processing
module
- - →
First
transmission
module

**FIG. 10**

Mapping
module
→
First
transmission
module

**FIG. 11**

Determination
module
→
Second
transmission
module

**FIG. 12**

Third
transmission
module

**FIG. 13**

## INTERNATIONAL SEARCH REPORT

| | International application No. |
| --- | --- |
| | **PCT/CN2019/080352** |

**A.    CLASSIFICATION OF SUBJECT MATTER**

H04L 5/00(2006.01)i;  H04W 72/04(2009.01)i

According to International Patent Classification (IPC) or to both national classification and IPC

**B.    FIELDS SEARCHED**

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNTXT; CNABS; CNKI; VEN; USTXT; EPTXT; WOTXT; 3GPP: 基站, 带宽, 切换, 时隙, 聚合, 成功, 失败, 数据, 传输, gNB, bandwidth, switch, change, slot, aggregation, scheduling, BWP, termination, drop, transmit, transmission, data

**C.    DOCUMENTS CONSIDERED TO BE RELEVANT**

| Category* | Citation of document, with indication, where appropriate, of the relevant passages | Relevant to claim No. |
| --- | --- | --- |
| A | HUAWEI et al. "On Bandwidth Part and Bandwidth Adaptation" *3GPP TSG RAN WG1 Meeting #89 R1-1706900*, 06 May 2017 (2017-05-06), pp. 1-9 | 1-21 |
| A | MEDIATEK INC. "Efficient Wider Bandwidth Operations for NR" *3GPP TSG RAN WG1 Meeting #89 R1-1707828*, 07 May 2017 (2017-05-07), pp. 1-7 | 1-21 |
| A | US 2018070369 A1 (SAMSUNG ELECTRONICS CO., LTD.) 08 March 2018 (2018-03-08) entire document | 1-21 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **05 May 2019** | **14 June 2019** |

| Name and mailing address of the ISA/CN | Authorized officer |
| --- | --- |
| **National Intellectual Property Administration, PRC (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2019/080352** |

| Patent document cited in search report | Publication date (day/month/year) | Patent family member(s) | Publication date (day/month/year) |
| --- | --- | --- | --- |
| US 2018070369 A1 | 08 March 2018 | WO 2018048176 A1 | 15 March 2018 |

Form PCT/ISA/210 (patent family annex) (January 2015)

**EP 3 780 459 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810291088